# EUROPÄISCHE PATENTSCHRIFT

(11) **EP 4 087 279 B1**
(45) Veröffentlichungstag und Bekanntmachung des Hinweises auf die Patenterteilung: **20.11.2024**
(21) Anmeldenummer: 22163587.3
(22) Anmeldetag: 22.03.2022
(51) Int. Cl.: H04R 25/00, H04R 1/10, H02J 7/00, H01R 4/00

(54) **LADEGERÄT EINES HÖRGERÄTS**
CHARGER FOR A HEARING DEVICE
CHARGEUR D'UN APPAREIL AUDITIF

(30) Priorität: 04.05.2021 DE 102021204485
(43) Veröffentlichungstag der Anmeldung: 09.11.2022
(73) Patentinhaber: Sivantos Pte. Ltd., Singapore 539775 (SG)
(72) Erfinder: VON MANSBERG, Thilo, 91058 Erlangen (DE)
(74) Vertreter: FDST Patentanwälte

(56) Entgegenhaltungen:
- DE-A1- 102007 042 324
- DE-U1- 29 718 104
- US-A1- 2017 093 087
- US-A1- 2018 175 643

## Beschreibung

Die Erfindung betrifft ein Ladegerät eines Hörgeräts. Das Ladegerät weist ein einen Kontakt zur lösbaren, direkten elektrischen Kontaktierung mit einem Gegenkontakt des Hörgeräts auf. Ferner betrifft die Erfindung ein System mit einem Ladegerät und einem Hörgerät.

Personen, die unter einer Verminderung des Hörvermögens leiden, verwenden üblicherweise ein Hörhilfegerät. Hierbei wird meist mittels eines elektromechanischen Schallwandlers ein Umgebungsschall erfasst. Die anhand des Umgebungsschalls erstellten elektrischen Signale werden mittels einer Verstärkerschaltung bearbeitet und mittels eines weiteren elektromechanischen Wandlers in Form eines Hörers in den Gehörgang der Person eingeleitet. Meist erfolgt zudem eine Bearbeitung der erfassten Schallsignale, wofür üblicherweise ein Signalprozessor der Verstärkerschaltung verwendet wird. Hierbei ist die Verstärkung auf einen etwaigen Hörverlust des Hörhilfegeräteträgers abgestimmt.

Für den Betrieb der Wandlers sowie der Verstärkerschaltung ist jeweils elektrische Energie erforderlich. Diese wird üblicherweise in Form einer Batterie bereitgestellt, die in einem Gehäuse des Hörhilfegeräts angeordnet ist. Somit ist eine Bewegungsfreiheit für die das Hörhilfegerät nutzende Person, also den Hörhilfegeräteträger, ermöglicht. Wenn die Batterie leer ist, ist erforderlich, diese auszutauschen. Hierfür weist das Gehäuse üblicherweise eine Klappe auf, durch die die Batterie zugänglich ist.

Nachteilig hierbei ist, dass aufgrund von Undichtigkeiten Fremdpartikel oder Feuchtigkeit in das Gehäuse eindringen können und somit die dort angeordneten Komponenten des Hörhilfegeräts, wie die Verstärkerschaltung, beschädigen können. Infolgedessen ist eine vergleichsweise umfangreiche Dichtung erforderlich. Aufgrund des vergleichsweise geringen Platzangebots sind dabei zudem Konstruktionskosten und Herstellungskosten erhöht. Aufgrund der vergleichsweise geringen Maße des Klappe sind für die Bedienung meist weitere Hilfsmittel erforderlich, und eine Fehlbedienung durch die Person ist nicht ausgeschlossen.

Eine Alternative sieht daher vor, eine wiederaufladbaren Batterie zu verwenden. Sofern die Batterie leer ist, ist es zur Bereitstellung der weiteren Funktionsfähigkeit somit lediglich erforderlich, diese erneut zu laden, ohne dass ein Ausbau erforderlich ist. Infolgedessen ist es möglich, das Gehäuse im Wesentlichen dicht auszugestalten, und eine Bedienung ist vereinfacht. Zum Laden wird üblicherweise ein Ladegerät verwendet. Bei einer Ausführungsform erfolgt das Laden der Batterie induktiv. Hierbei ist es jedoch erforderlich, dass das Hörhilfegerät in einer bestimmten Position bezüglich des Ladegeräts positioniert wird, damit ein effizientes Übertragen der elektrischen Energie erfolgen kann. Auch ist hierfür eine zusätzliche Schaltung innerhalb des Hörhilfegeräts erforderlich, sodass die Größe des Gehäuses erhöht ist.

In einer Alternative hierzu weist das Ladegerät Kontakte auf, die elektrisch direkt mit entsprechenden Gegenkontakten des Hörhilfegeräts kontaktiert werden. Beispielsweise werden hierbei der Kontakt und der Gegenkontakt ineinandergesteckt. Aufgrund der vergleichsweise geringen Abmessungen ist dies jedoch lediglich vergleichsweise schwierig durchführbar. In einer Alternative hierzu ist der Gegenkontakt meist als flache Metallplatte ausgestaltet, und der Kontakt des Ladegerät ist nach Art eines Pogo-Pins geformt. Mittels Auflegen des Gegenkontakts auf den Kontakt wird die elektrische Kontaktierung erstellt. Aufgrund der Pogo-Pins erfolgt hierbei eine Toleranzausgleich, sodass auch bei einem nicht exakten Auflegen des Gegenkontakts auf den Kontakt ein elektrischer Übertrag von elektrischer Energie ermöglicht ist. Somit ist eine Handhabung vereinfacht.

Der Pogo-Pins weist üblicherweise einen Kontaktbereich auf, der federbelastet ist. Wenn der Gegenkontakt auf den Kontakt aufgelegt wird, wird die Feder zumindest teilweise komprimiert und gespannt, sodass die beiden Kontakte kraftschlüssige aneinander anliegen. Aufgrund der vergleichsweise geringen Abmessungen ist jedoch eine Herstellung erschwert. Auch steht hierbei der Kontaktbereich des Pogo-Pins, wenn dieser nicht elektrisch mit der Gegenkontakt kontaktiert ist, vergleichsweise weit aufgrund der wirkenden Federkraft aus einem Gehäuse des Ladegeräts hervor. Bei einer unsachgemäßen Handhabung des Ladegerät ist es somit nicht ausgeschlossen, dass weitere Gegenstände gegen den nicht bündig angeordneten Pogo-Pin bewegt werden, was zu einer Beschädigung dessen führen kann.

DE 10 2007 042 324 A1 zeigt ein Hörgerät, welches mindestens ein in das Hörgerätegehäuse versenkbares Kontaktmittel aufweist. Das Kontaktmittel kontaktiert in einer ausgefahrenen oder ausgeklappten Position eine externe Einheit, beispielsweise ein Batterieladegerät. Die Einheit weist zur Aufnahme des Kontaktmittels eine korrespondierende Öffnung auf.

US 2017/0093087 A1 offenbart magnetisch betätigte elektrische Steckverbinder. Die elektrischen Steckverbinder umfassen bewegliche magnetische Elemente, die sich als Reaktion auf ein von außen angelegtes Magnetfeld bewegen. Die elektrischen Steckverbinder besitzen vertiefte Kontakte, die sich als Reaktion auf ein von außen angelegtes Magnetfeld, das mit einem elektronischen Gerät verbunden ist, an das der Steckverbinder angeschlossen werden soll, von einer vertieften Position in eine Eingriffsposition bewegen.

In US 2018/0175643 A1 ist eine Vorrichtung zum Aufladen eines tragbaren Geräts offenbart. Die Vorrichtung umfasst einen Leistungsempfänger umfassen, der in der tragbaren Vorrichtung angeordnet und so konfiguriert ist, dass er Leistung empfängt und die Leistung an die tragbare Vorrichtung liefert. Es ist ein Verbinder vorhanden, der so konfiguriert ist, dass er einen ersten Magneten und ein magnetisches Element umfasst, wobei der erste Magnet über das magnetische Element elektrisch mit dem Leistungsempfänger verbunden ist, während der erste Magnet durch eine erste Magnetkraft an dem Leistungsempfänger befestigt ist.

Aus DE 297 18 104 U1 ist eine Ladevorrichtung für Hörgeräte mit einer Ladeschaltung für das kontaktlose Aufladen eines in dem Hörgerät befindlichen Akkumulators und mit einem Gehäuse bekannt, das über wenigstens einen Deckel verschließbar ist. In dem Gehäuse sind eine oder zwei längliche Aufnahmemulden mit einem Längen zu Breitenverhältnis von größer als 1 vorgesehen, in die ein Hinter-dem-Ohr-Hörgerät oder ein In-dem-Ohr-Hörgerät passt.

Der Erfindung liegt die Aufgabe zugrunde, ein besonders geeignetes Ladegerät eines Hörgeräts und ein besonders geeignetes System mit einem Ladegerät und einem Hörgerät anzugeben, wobei insbesondere eine Reparaturanfälligkeit und/oder Herstellungskosten verringert sind.

Hinsichtlich des Ladegeräts wird diese Aufgabe durch die Merkmale des Anspruchs 1 und hinsichtlich des Systems durch die Merkmale des Anspruchs 11 erfindungsgemäß gelöst. Vorteilhafte Weiterbildungen und Ausgestaltungen sind Gegenstand der Unteransprüche.

Das Ladegerät dient dem Laden eines Hörgeräts, also dem Versorgung des Hörgeräts mit elektrischer Energie. Hierfür ist das Ladegerät geeignet, insbesondere vorgesehen und eingerichtet. Insbesondere ist es möglich, das Hörgerät lösbar mit dem Ladegerät zu verbinden oder zumindest elektrisch mit diesem zu kontaktieren. Mittels des Ladegeräts wird dabei bei Betrieb elektrische Energie zu dem Hörgerät transferiert, insbesondere zu einem Energiespeicher des Hörgeräts. Zusammenfassend wird unter Ladegerät eines Hörgeräts insbesondere ein Ladegerät für ein Hörgerät verstanden, wobei das Ladegerät kein Bestandteil des Hörgeräts ist.

Das Hörgerät weist hierfür zweckmäßigerweise einen Gegenkontakt auf, der beispielsweise in ein Hörgerätegehäuse eingebracht ist. Der Gegenkontakt ist aus einem elektrisch leitfähigen Material, insbesondere ein Metall, gefertigt. Beispielsweise ist der Gegenkontakt aus einem ferromagnetischen Material gefertigt und zum Beispiel magnetisiert. Der Gegenkontakt ist zweckmäßigerweise mit dem Energiespeicher elektrisch kontaktiert. Nachdem das Hörgerät, insbesondere der Energiespeicher, zumindest teilweise geladen wurde, ist es vorzugsweise möglich, das Hörgerät von dem Ladegerät zu entfernen, sodass das Hörgerät unabhängig von Ladegerät verwendet werden kann.

Das Ladegerät weist eine Ladeeinrichtung auf, die ein Gehäuse umfasst. Innerhalb des Gehäuses ist ein Magnet angeordnet, der in einer Längsrichtung beweglich geführt ist. Insbesondere ist es möglich, den Magneten in Längsrichtung innerhalb des Gehäuses zu verschieben. Zweckmäßigerweise ist es lediglich möglich, den Magneten in Längsrichtung zu bewegen, sodass dieser lediglich in einer Dimension verbringbar ist. Vorzugsweise erfolgt die Führung des Magneten mittels des Gehäuses selbst, geeigneterweise mittels etwaiger Innenwände des Gehäuses oder zumindest Teilen von Innenwänden des Gehäuses. Hierfür ist bevorzugt zwischen dem Gehäuse und dem Magneten eine Spielpassung realisiert. Das Gehäuse weist ferner einen Gehäusedeckel auf, der das Gehäuse insbesondere in der Längsrichtung einseitig begrenzt. Beispielsweise ist der Gehäusedeckel an weiteren Bestandteilen des Gehäuses befestigt oder an dieses angeformt, sodass das Gehäuse insgesamt einstückig ist. Zum Beispiel ist der Gehäusedeckel an einem topfförmigen Rest des Gehäuses befestigt. Insbesondere bildet der Gehäusedeckel zumindest teilweise eine Stirnseite des Gehäuses und ist hierfür insbesondere im Wesentlichen senkrecht zur Längsrichtung angeordnet.

Bevorzugt ist der Magnet ein Permanentmagnet. Der Magnet ist beispielsweise aus einem Ferrit oder aus seltenen Erden erstellt oder umfasst zumindest jeweils diese. Geeigneterweise ist der Magnet zumindest teilweise zylinderförmig ausgestaltet, und das Gehäuses zumindest abschnittsweise hohlzylindrisch, wobei der Magnet umfangsseitig von dem Gehäuse umgeben wird. Vorzugsweise ist dabei die Zylinderachse des Magneten parallel zu der Längsrichtung.

An einem Längsende des Magneten ist ein Kontakt angebunden und beispielsweise an diesem befestigt oder zumindest an diesem abgestützt. Der Kontakt ist aus einem elektrisch leitfähigen Material erstellt, beispielsweise einem Messing, Kupfer, magnetischem Stahl oder einem sonstigen Metall. Der Kontakt dient der direkten elektrischen Kontaktierung mit dem Gegenkontakt des Hörgeräts und ist hierfür geeignet, insbesondere vorgesehen und eingerichtet. Somit ist es möglich, den Gegenkontakt des Hörgeräts mit dem Kontakt elektrisch zu kontaktieren, wofür diese insbesondere mechanisch aneinander anliegen. Mittels Lösen wird die elektrische Kontaktierung unterbrochen und somit das Hörgerät galvanisch von dem Ladegerät getrennt. Mit anderen Worten ist die elektrische Verbindung zwischen dem Gegenkontakt und dem Kontakt galvanisch trennbar.

Der Kontakt ist mittels einer Leitung mit einer Ladeschaltung elektrisch verbunden. Die Ladeschaltung ist beispielsweise ebenfalls an dem Magneten angebunden oder separat von diesen. Die Ladeschaltung umfasst beispielsweise zumindest ein elektrisches und/oder elektronisches Bauteil, und mittels dieser wird insbesondere eine an das Ladegerät angelegte elektrische Spannung zum Laden des Hörgeräts transformiert. Hierfür weist die Ladeschaltung beispielsweise einen Transformator oder zumindest einen Umrichter auf. Alternativ oder in Kombination hierzu umfasst die Ladeschaltung eine Regelung, mittels derer das an dem Kontakt anliegende elektrische Potential eingestellt werden kann. Insbesondere ist die Regelung entsprechend betrieben. Beispielsweise weist die Ladeschaltung einen Anschluss an ein Stromnetz auf, der beispielsweise in Form eines Kabels bereitgestellt ist. Bei Betrieb erfolgt mittels der Ladeschaltung insbesondere ein Umwandeln von einer in dem Stromnetz bereitgestellten elektrischen Wechselspannung in eine elektrische Gleichspannung.

Der Gehäusedeckel weist eine Öffnung auf, innerhalb derer der Kontakt eingelegt ist. Zwischen dem Kontakt und der Öffnung ist bevorzugt eine Spielpassung realisiert. Da der Magnet in Längsrichtung bewegbar ist, ist somit auch der Kontakt in Längsrichtung beweglich. Zweckmäßigerweise ist der Kontakt vollständig von dem Gehäusedeckel umgeben und/oder bündig mit diesem, wenn der Magnet von dem Gehäusedeckel in Längsrichtung beabstandet - und beispielsweise den maximal möglichen Abstand zu diesem aufweist - oder zumindest in diese Richtung bewegt ist. Falls dahingegen der Magnet in Richtung des Gehäusedeckels bewegt ist, ragt der Kontakt geeigneterweise durch den vollständige Gehäusedeckel hindurch steht zweckmäßigerweise über den Gehäusedeckel über.

Mit anderen Worten ist bei einer der Stellungen des Magneten vorzugsweise der Kontakt bezüglich des Gehäusedeckels oder des Gehäuses nach innen versetzt. In diesem Fall ist eine Beschädigung des Kontakts vermieden, und dieser wird mittels des Gehäusedeckels zumindest teilweise geschützt. Aufgrund der Längsbeweglichkeit des Magneten und des Kontakts ist dabei möglich, den Kontakt von dem Gehäuse wegzubewegen, sodass eine elektrische Kontaktierung mit dem Gegenkontakt des Hörgeräts erleichtert ist. Hierbei erfolgt insbesondere aufgrund einer magnetischen Wechselwirkung des Gegenkontakt mit dem Magneten eine Bewegung des Magneten in Längsrichtung auf den Gehäusedeckel zu, sodass der Kontakt über den Gehäusedeckel übersteht oder zumindest in Richtung des Gegenkontakts bewegt wird. Somit ist es Herstellen der elektrischen Kontaktierung vereinfacht. Dabei sind keine vergleichsweise filigranen Bauteile erforderlich, und es ist möglich, die Ladeeinrichtung vergleichsweise robust auszugestalten. Somit sind eine Reparaturanfälligkeit und auch Herstellungskosten verringert. Auch ist es möglich, den Gegenkontakt vergleichsweise tief innerhalb des Hörgerätegehäuses anzuordnen, also von dessen Oberfläche weg in das Innere hinein zu versetzen, sodass dieser geschützt ist. Dabei ist dennoch eine elektrische Kontaktierung des Kontakts mit dem Gegenkontakt ermöglicht.

Der Kontakt ist vorzugsweise zumindest teilweise oder vollständig zylindrisch ausgestaltet, wobei die Achse des Kontakts geeigneterweise parallel zur Längsrichtung ist. Auf diese Weise ist eine Montage in der Öffnungen sowie ein Bewegen des Kontakts vereinfacht. Der Kontakt ist geeigneterweise zumindest teilweise innerhalb des Gehäuses angeordnet und ragt beispielsweise durch die Gehäusewand hindurch. Vorzugsweise ist der Kontakt auf Seiten des Magneten mittels eines Dichtring umgeben, mittels dessen ein Eindringen von Fremdpartikeln durch die Öffnung in das Gehäuse vermieden ist. Der Dichtring ist beispielsweise aus einem Gummi erstellt und liegt zweckmäßigerweise an dem Kontakt umfangsseitig an.

Besonders bevorzugt umfasst das Ladegeräts zwei derartige Kontakte, und das Hörgerät umfasst zum Beispiel zwei entsprechende Gegenkontakte. Beispielsweise sind hierbei die beiden Kontakte an dem gleichen Magneten angebunden, und der Gehäusedeckel weist zwei Öffnungen auf, wobei jeder der Öffnungen jeweils einer der Kontakte zugeordnet ist. Infolgedessen werden die beiden Kontakte mittels des gleichen Magneten bewegt. Alternativ hierzu umfasst das Ladegerät zwei Ladeeinrichtungen, wobei jeder der Ladeeinrichtungen jeweils einer der Kontakte zugeordnet ist. Mittels der Ladeschaltung wird bei Betrieb bevorzugt eine elektrische Spannung bereitgestellt, die an die beiden Kontakte angelegt wird, sodass zwischen diesen eine elektrische Potentialdifferenz besteht. Auf diese Weise ist ein Laden des Hörgeräts vereinfacht, wenn dieses die zwei Gegenkontakte aufweist, von den jeweils einer mit einem der Kontakte elektrisch kontaktiert wird.

In einer Alternative ist der Kontakt an einer ersten Leiterplatte befestigt. Die erste Leiterplatte ist insbesondere starr ausgestaltet und vorzugsweise aus einem glasfaserverstärkten Epoxidharz gefertigt. Die erste Leiterplatte ist an dem Magneten befestigt, insbesondere mittels Klebens. Alternativ hierzu erfolgt lediglich ein Abstützen der erste Leiterplatte und dem Magneten, wobei vorzugsweise aufgrund von weiteren baulichen Gegebenheiten die Position der ersten Leiterplatte bezüglich des Magneten nicht oder lediglich in einem bestimmten Umfang verändert werden kann. Somit ist es möglich, die erste Leiterplatte und dem daran angebundenen Kontakt als Modul bereitzustellen, das an dem Magneten montiert/befestigt wird, was eine Montage vereinfacht.

Der Kontakt ist beispielsweise mittels SMD-Technik an der ersten Leiterplatte befestigt, und der Kontakt ein oberflächenmontierbares Bauteil ist. Auf diese Weise ist eine automatisierte Erstellung des Moduls möglich, was eine Herstellung vereinfacht und beschleunigt. Der Kontakt ist hierfür zweckmäßigerweise zumindest teilweise zylindrisch ausgestaltet und geeigneterweise senkrecht zur ersten Leiterplatte angeordnet. Diese ist vorzugsweise senkrecht zur Längsrichtung angeordnet, sodass die Achse des Kontakts geeigneterweise parallel zur Längsrichtung ist.

Die Leitung ist beispielsweise mittels eines Kabels gebildet oder besonders bevorzugt mittels einer flexiblen Leiterplatte, die an der ersten Leiterplatte befestigt ist. Zum Beispiel wird hierfür ebenfalls eine SMD-Technik verwendet, oder die flexible Leiterplatte wird anderweitig an der ersten Leiterplatte angelötet. Alternativ hierzu ist an der ersten Leiterplatte ein Stecker befestigt, in den die flexible Leiterplatte eingesteckt wird. In einer weiteren Alternative hierzu ist die erste Leiterplatte und die flexible Leiterplatte zueinander einstückig, sodass die erste Leiterplatte ebenfalls flexibel ausgestaltet ist. Aufgrund der flexiblen Leiterplatte ist eine elektrische Kontaktierung der Ladeschaltung mit dem Kontakt stets sichergestellt, unabhängig von der Position des Kontakts und/oder des Magneten innerhalb des Gehäuses.

Bevorzugt umfasst das Ladegerät eine zweite Leiterplatte, mittels derer das Gehäuse umfangsseitig umgeben ist. Die zweite Leiterplatte ist hierbei ein Bestandteil der Ladeschaltung und bildet beispielsweise diese. Hierfür umfasst die zweite Leiterplatte beispielsweise mehrere elektrische/elektronische Bauteile oder diese sind zumindest an der zweiten Leiterplatte befestigt. Alternativ hierzu umfasst die Ladeschaltung noch weitere Bestandteile oder Leiterplatten, die beispielsweise von der zweiten Leiterplatte beabstandet sind. Die zweite Leiterplatte ist bevorzugt ringförmig ausgebildet, und insbesondere mittels des Gehäuses stabilisiert. Besonders bevorzugt ist die zweite Leiterplatte an dem Gehäusedeckel befestigt, sodass die zweite Leiterplatte einen vergleichsweise geringen Abstand zu der ersten Leiterplatte aufweist. Somit ist eine Länge der flexiblen Leiterplatte und daher die Wege der elektrischen Kontaktierung vergleichsweise kurz. Beispielsweise ist die zweite Leiterplatte ebenfalls flexibel ausgestaltet und zum Beispiel einstückig mit der flexiblen Leiterplatte und/oder der erste Leiterplatte. Besonders bevorzugt ist die zweite Leiterplatte starr ausgebildet und zum Beispiel aus einem glasfaserverstärkten Epoxidharz gefertigt. Auf diese Weise ist eine Robustheit erhöht und eine Fertigung vereinfacht. Aufgrund der zweite Leiterplatte ist somit ein vergleichsweise kompakter Ladegeräts bereitgestellt, und eine Montage der einzelnen Bauteile ist vereinfacht.

In einer Alternative hierzu ist die Ladeschaltung separat von dem Gehäuse angeordnet, und die flexible Leiterplatte ist zweckmäßigerweise an dem Umfang des Magneten entlang der Längsrichtung geführt. Somit wird mittels der flexiblen Leiterplatte eine elektrische Kontaktierung des Kontakts mit dem Gegenkontakt nicht behindert, und die flexible Leiterplatte ist vorzugsweise zumindest teilweise zwischen dem Magneten und der etwaigen Innenwand des Gehäuses angeordnet und somit mittels dieser geschützt.

In einer Alternative hierzu verläuft durch den Magneten eine in Längsrichtung verlaufende Aussparung, die insbesondere nach Art einer Bohrung ausgestaltet ist. Innerhalb der Aussparung ist die Leitung angeordnet, die somit mittels des Magneten geschützt wird. Auch ist auf diese Weise eine Beschädigung der Leitung aufgrund einer Reibung/Bewegung des Magneten an/bzgl. der etwaigen Innenwand vermieden. Die Leitung ist geeigneterweise mittels eines Kabels/Litze gebildet, sodass eine Montage vereinfacht ist. Die Aussparung ist zweckmäßigerweise mittels des Kontakts einseitig verschlossen. Infolgedessen ist ein Eindringen von Fremdpartikeln in die Aussparung vermieden, sodass eine Betriebssicherheit erhöht ist. Auch ist ein Eindringen von Feuchtigkeit verhindert. Zudem ist eine Relativbewegung der Leitung bezüglich des Kontakts vermieden, die zu einem Verschleiß führen könnte. Beispielsweise ist der Kontakt lediglich auf die Oberfläche des Magneten aufgesetzt. Besonders bevorzugt jedoch greift der Kontakt zumindest teilweise in die Aussparung ein und ist somit teilweise innerhalb dieser angeordnet.

Geeigneterweise weist der Kontakt eine Stufe auf, die über die Aussparung übersteht und/oder die Aussparung teilweise umgreift. Mittels der Stufe wird ein Einführen des Kontakts in die Aussparung begrenzt. Somit ist eine Montage vereinfacht. Auch wird der Kontakt mittels der Aussparung stabilisiert, weswegen eine Robustheit erhöht ist. Geeigneterweise ist der Querschnitt des Kontakts in Längsrichtung somit zumindest teilweise L-förmig oder C-förmig.

Der Gehäusedeckel ist biegeelastisch ausgestaltet und besonders bevorzugt aus einem Gummi erstellt. Somit wird, wenn der Gegenkontakt vergleichsweise weit in das Hörgerätegehäuse hineinversetzt ist, aufgrund der wirkenden magnetischen Kraft der Gehäusedeckel mittels des Magneten zumindest teilweise elastisch in Richtung des Gegenkontakt gewölbt, sodass eine elektrische Kontaktierung des Kontakts mit dem Gegenkontakt erfolgt.

Beispielsweise ist hierbei der Kontakt an dem Gehäusedeckel befestigt, sodass eine Robustheit erhöht ist. Da der Gehäusedeckel biegeelastisch ausgestaltet ist, wird somit dieser mit dem Kontakt in Längsrichtung bewegt, wenn die elektrische Kontaktierung mit dem Gegenkontakt hergestellt wird. Geeigneterweise ist dabei zwischen dem Kontakt und dem Gehäusedeckel eine fluiddichte Verbindung erstellt, beispielsweise mittels eines Klebstoffs. Somit ist ein Eindringen von Fremdpartikeln in die Ladeeinrichtung durch die Öffnung vermieden. Beispielsweise ist der Gehäusedeckel an weiteren Bestandteilen des Gehäuses befestigt, die insbesondere aus einem Kunststoff erstellt sind. Alternativ hierzu ist das vollständige Gehäuse aus dem Gummi erstellt und somit biegeelastisch. Somit ist auch ein Einbringen des Magneten in das Gehäuse ermöglicht, nämlich in-dem dieses biegeelastisch verformt wird. Hierfür weist das Gehäuse zweckmäßigerweise einen Schlitz auf, der biegeelastisch aufgeweitet werden kann.

Besonders bevorzugt ist die Beweglichkeit des Magneten in Längsrichtung begrenzt, insbesondere auf unter 1 cm, auf unter 5 mm, auf unter 3 mm oder auf unter 2 mm. Auf diese Weise ist ein Verkannten des Kontakts und/oder des Magneten innerhalb des Gehäuses vermieden und eine Funktionssicherheit somit erhöht. Auch ist eine derartige Beweglichkeit zur Herstellung der elektrischen Kontaktierung mit dem Gegenkontakt ausreichend. Geeigneterweise weist das Gehäuse einen Anschlag für den Magneten auf, mittels dessen die Bewegung des Magneten begrenzt ist, zumindest in eine Richtung. Insbesondere ist hierbei mittels des Gehäusedeckels der Anschlag bereitgestellt. Alternativ oder in Kombination hierzu weist das Gehäuse an dem dem Gehäusedeckel abgewandten Enden den Anschlag auf, der beispielsweise mittels einer senkrecht zur Längsrichtung angeordneten Platte, beispielsweise einem weiteren Deckel, bereitgestellt ist. Bevorzugt ist der Anschlag nach Art eines Rings geformt, sodass das Gehäuse nicht druckdicht ausgestaltet ist, weswegen eine Bewegung des Magneten innerhalb des Gehäuses zwischen den Anschlägen nicht behindert ist.

Besonders bevorzugt ist an dem Magnete auf der dem Kontakt gegenüberliegenden Seiten, also auf der dem Gehäusedeckel gegenüberliegenden Seite, eine Leiste angebunden. Die Leiste ist vorzugsweise an dem Magneten befestigt und beispielsweise an diesem angeklebt. Die Leiste ist quer zur Längsrichtung angeordnet und steht über den Magneten über. Somit steht die Leiste seitlich über den Magneten über, also senkrecht zur Längsrichtung. Die Leiste ist innerhalb eines Schlitzes des Gehäuses geführt, der in Längsrichtung verläuft. Somit wird mittels der Leiste ein Verdrehen des Magneten bezüglich des Gehäuses vermieden, was anderweitig zu einem Verkannten des Kontakts und dem Gehäusedeckel führen könnte. Ferner wird mittels der Leiste und dem Boden des Schlitzes die Bewegung des Magneten innerhalb des Gehäuses begrenzt, sodass insbesondere mittels der Leiste und dem Schlitz der etwaige Anschlag bereitgestellt ist.

Beispielsweise ist das dem Magneten abgewandte Ende des Kontakts, mittels dessen insbesondere die direkte elektrische Kontaktierung mit dem Gegenkontakt erfolgt, und das in diesem Fall zweckmäßigerweise mechanisch direkt an dem Gegenkontakt anliegt, eben und beispielsweise senkrecht zur Längsrichtung. Besonders bevorzugt jedoch ist das dem Magneten abgewandte Ende des Kontakts gewölbt. Somit ist die Oberseite des Kontakts gebogen und beispielsweise konvex oder konkav geformt. Zweckmäßigerweise ist dabei das Ende und vorzugsweise der vollständige Kontakt rotationssymmetrisch bezüglich der Achse des Kontakts. Geeigneterweise ist dabei der Gegenkontakt entsprechend ausgestaltet und weist die jeweils korrespondierende Wölbung auf. Aufgrund der Wölbung ist auch bei einem bezüglich des Ladegeräts nicht vollständig ausgerichteten Hörgerät, beispielsweise aufgrund einer fehlerhaften Anordnung des Hörgeräts oder aufgrund von Fertigungstoleranzen, dennoch ein flächiger mechanischer Kontakt zwischen dem Kontakt und dem Gegenkontakt ermöglicht, sodass ein Kontaktwiderstand der reduziert ist. Folglich ist ein Energiebedarf für das Laden verringert und eine Erwärmung im Bereich des Kontakts aufgrund des vergleichsweise geringen elektrischen Widerstands verringert.

Besonders bevorzugt ist die Ladeeinrichtung derart angeordnet, dass die Längsrichtung lotrecht ist. Zumindest ist hierbei die Längsrichtung lotrecht, wenn sich das Ladegerät im bestimmungsgemäßen Zustand befindet. In diesem Fall befindet sich der Kontakt zweckmäßigerweise oberhalb des Magneten. Infolgedessen wird der Magnet aufgrund der wirkenden Gewichtskraft lotrecht, also vertikal, nach unten bewegt und somit von der Gehäusewand weg. Wenn dahingegen der Gegenkontakt von oben an die Ladeeinrichtung angenähert wird, wird mittels der Magnetkraft die Gewichtskraft zumindest teilweise kompensiert und der Magnet angehoben. Infolgedessen wird der Kontakt in Richtung des Gegenkontakt bewegt, was die elektrische Kontaktierung vereinfacht.

Bei einem erneuten Beabstanden des Gegenkontakts und somit einem Verringern der magnetischen Wechselwirkung zwischen dem Magneten und dem Gegenkontakt wird der Magnet und somit der Kontakt erneut lotrecht nach unten bewegt. Somit wird der Kontakt in die Öffnung oder zumindest in Richtung des Gehäuses bewegt. Mit anderen Worten wird somit der Kontakt aufgrund der Gewichtskraft erneut in die gesicherte Position bewegt, in der eine Beschädigung des Kontakt verhindert ist.

Alternativ oder in Kombination hierzu ist ein zusätzliches Bauteil vorhanden, mittels dessen der Magnet von der Gehäusewand beabstandet wird oder zumindest in die der Gehäusewand abgewandte Richtung bewegt wird, wenn keine magnetischen Wechselwirkung mit dem Gegenkontakt vorhanden ist. Das zusätzliche Bauteil ist beispielsweise eine Feder, insbesondere eine Metallfeder, sodass eine Robustheit erhöht ist. Auch ist es möglich, das Ladegerät in unterschiedlichen Positionen und Ausrichtungen zu verwenden.

Besonders bevorzugt weist das Ladegerät eine Ladeschale auf, die beispielsweise aus einem Kunststoff erstellt ist. Die Ladeschale ist mit einer Einlage ausgekleidet, die insbesondere der Stabilisierung des Hörgeräts während des Ladevorgangs dient. Dafür liegt das Hörgerät beispielsweise zumindest teilweise formschlüssig an der Einlage an, die somit entsprechend des Hörgeräts geformt ist. Besonders bevorzugt ist die Einlage biegeelastisch ausgestaltet und geeigneterweise aus einem Gummi gefertigt. Auf diese Weise erfolgt mittels der Einlage zumindest teilweise ein Toleranzausgleich, und eine Beschädigung des Hörgeräts ist beim Einlegen des Hörgeräts in die Einlage vermieden. Insbesondere ist die Ladeschaltung an der Ladeschale befestigt und beispielsweise zwischen einer Wand der Ladeschale und der Einlage angeordnet und wird somit mittels dieser geschützt.

Geeigneterweise ist die Ladeeinrichtung an der Einlage befestigt, sodass bei entsprechender Positionierung des Hörgeräts in der Einlage der Gegenkontakt stets mit dem Kontakt mechanisch und daher elektrisch kontaktiert wird. Besonders bevorzugt weist die Einlage hierfür eine Ladeöffnung auf, die zumindest teilweise mittels des Gehäusedeckels verschlossen ist. Somit wird das Hörgerät bezüglich des Kontakts stets sicher positioniert. Besonders bevorzugt weist die Ladeeinrichtung und/oder die Einlage eine Dichtung auf, die zwischen diesen angeordnet ist, sodass ein Eindringen von Fremdpartikeln zwischen der Einlage und der Ladeeinrichtung vermieden ist. Besonders bevorzugt ist die Dichtung an dem Gehäusedeckel befestigt und beispielsweise an diesem angeformt. Vorzugsweise ist hierbei der Gehäusedeckel aus einem Gummi gefertigt und weist die Dichtung in Form einer in Längsrichtung vorspringenden Wulst auf, die beispielsweise kreisrund ist, und den Kontakt vorzugsweise in einem Abstand umgibt. Zumindest umgibt die Dichtung die Ladeöffnung und liegt beispielsweise im Montagezustand kraftschlüssige an der Einlage an. Somit ist eine Dichtigkeit weiter erhöht.

Beispielsweise ist die Einlage stoffschlüssig an der Ladeschale befestigt. Besonders bevorzugt jedoch ist die Einlage lösbar an der Ladeschale befestigt und zudem auch lösbar an der Ladeeinrichtung. Somit ist es möglich, mittels Austausch der Einlage das Ladegerät an unterschiedliche Hörgeräte anzupassen, wobei jeweils die gleiche Ladeschale und die gleiche Ladeeinrichtung verwendet werden können. Infolgedessen ist es möglich, die Ladegerät für eine Anzahl unterschiedlicher Hörgerät zu fertigen, wobei jeweils lediglich die Einlage angepasst wird. Somit ist zumindest teilweise eine Massenfertigung ermöglicht, weswegen Herstellungskosten reduziert sind. Besonders bevorzugt ist es zudem möglich, die Ladeeinrichtung in zumindest zwei unterschiedlichen oder mehreren Positionen an der Einlage zu befestigen, sodass eine Flexibilität weiter erhöht ist.

Das System weist ein Hörgerät auf. Das Hörgerät ist beispielsweise ein Kopfhörer oder umfasst einen Kopfhörer. Besonders bevorzugt ist das Hörgerät jedoch ein Hörhilfegerät. Das Hörhilfegerät dient der Unterstützung einer unter einer Verminderung des Hörvermögens leidenden Person. Mit anderen Worten ist das Hörhilfegerät ein medizinisches Gerät, mittels dessen beispielsweise ein partieller Hörverlust ausgeglichen wird. Das Hörhilfegerät ist beispielsweise ein "Receiver-in-the-canal"-Hörhilfegerät (RIC; Ex-Hörer- Hörhilfegerät), ein Im-Ohr-Hörhilfegerät, wie ein "in-the-ear"-Hörhilfegerät, ein "in-the-canal"-Hörhilfegerät (ITC) oder ein "complete-in-canal"-Hörhilfegerät (CIC), eine Hörbrille, ein Taschenhörhilfegerät, ein Knochenleitungs-Hörhilfegerät oder ein Implantat. Alternativ ist das Hörhilfegerät ein Hinter-dem-Ohr-Hörhilfegerät ("Behind-the-Ear"-Hörhilfegerät), das hinter einer Ohrmuschel getragen wird.

Das Hörgerät ist vorgesehen und eingerichtet, am menschlichen Körper getragen zu werden. Mit anderen Worten umfasst das Hörgerät bevorzugt eine Haltevorrichtung, mittels derer eine Befestigung am menschlichen Körper möglich ist. Alternativ oder in Kombination hierzu ist das Hörgerät geeignet geformt. Sofern es sich bei dem Hörgerät um ein Hörhilfegerät handelt, ist das Hörgerät vorgesehen und eingerichtet, beispielsweise hinter dem Ohr oder innerhalb eines Gehörgangs angeordnet zu werden. Insbesondere ist das Hörgerät kabellos und dafür vorgesehen und eingerichtet, zumindest teilweise in einen Gehörgang eingeführt zu werden.

Das Hörgerät weist vorzugsweise ein Hörgerätegehäuse auf. Im Hörgerätegehäuse sind vorzugsweise im Wesentlichen sämtliche weiteren Komponenten des Hörgeräts angeordnet, zumindest vorzugsweise eine etwaige Elektronik, wie eine Verstärkerschaltung. Beispielsweise ist das Hörgerätegehäuse einstückig oder besonders bevorzugt aus mehreren Bestandteilen erstellt. Das Hörgerätegehäuse ist geeigneterweise aus einem Kunststoff gefertigt, insbesondere in einem Kunststoffspritzgussverfahren. Somit ist eine Gestaltungsfreiheit vergleichsweise groß. Auch ist ein Gewicht des Hörgerätegehäuse nicht übermäßig erhöht.

In dem Hörgerätegehäuse ist z.B. ein Mikrofon angeordnet, also insbesondere ein elektromechanischer Schallwandler. Das Mikrofon dient dem Erfassen von Umgebungsschall und ist dafür geeignet, insbesondere vorgesehen und eingerichtet.

Insbesondere ist das Mikrofon elektrisch und/oder signaltechnisch mit der etwaigen Elektronik, insbesondere der Verstärkerschaltung, oder sonstigen elektrischen/elektronischen Komponenten des Hörgeräts verbunden. Mittels dieser erfolgt geeigneterweise eine Bearbeitung der mittels des Mikrofons erfassten Signale.

Besonders bevorzugt umfasst das Hörgerät einen weiteren elektromechanischen Schallwandler, insbesondere ein Hörer, mittels dessen eine Abgabe der mittels der etwaigen Verstärkerschaltung bearbeiteten Signale erfolgt. Beispielsweise ist der Hörer ebenfalls in dem Hörgerätegehäuse angeordnet oder in einem weiteren Gehäuse. Zum Beispiel erfolgt hierbei eine signaltechnische Verbindung der beiden Gehäuse mittels einer Leitung, insbesondere sofern es sich bei dem Hörgerät um ein RIC-Hörhilfegerät handelt.

Das Hörgerät umfasst einen Energiespeicher, mittels dessen eine Energieversorgung bereitgestellt ist. Zweckmäßigerweise wird der Energiespeicher zum Bestromen der etwaigen Elektronik/Schallwandler verwendet. Der Energiespeicher ist geeigneterweise innerhalb des etwaigen Hörgerätegehäuses angeordnet. Der Energiespeicher ist wiederaufladbar, und zweckmäßigerweise eine wiederaufladbare Batterie. Das Hörgerät umfasst einen Gegenkontakt, der zum Beispiel in das Hörgerätegehäuse eingebracht ist. Somit ist der Gegenkontakt von außerhalb des Hörgerätegehäuses zugänglich. Beispielsweise umfasst das Hörgerätegehäuse eine Abdeckung, die lösbar über den Gegenkontakt verbracht werden kann, beispielsweise geklappt. Der Gegenkontakt ist vorzugsweise elektrisch mit dem Energiespeicher verbunden, beispielsweise direkt oder über eine Ladeschaltung.

Das System weist ferner ein Ladegerät auf, das dem Laden des Hörgeräts, nämlich des Energiespeichers, dient. Hierfür ist es Ladegerät geeignet, insbesondere vorgesehen und eingerichtet. Dabei sind das Ladegerät und das Hörgerät zueinander separate Einheiten/Bestandteile des Systems, die voneinander entfernt werden können. Beim Laden hingegen sind das Ladegerät und das Hörgerät elektrisch miteinander kontaktiert.

Das Ladegerät umfasst eine Ladeeinrichtung die ein ein Gehäusedeckel umfassendes Gehäuse und einen darin angeordneten, in einer Längsrichtung beweglich geführten Magneten aufweist. An dem Magneten ist an einem Längsende ein Kontakt zur lösbaren, direkten elektrischen Kontaktierung mit dem Gegenkontakt des Hörgeräts angebunden, welcher mittels einer Leitung mit einer Ladeschaltung elektrisch verbunden ist. Der Gehäusedeckel weist eine Öffnung aufweist, innerhalb derer der Kontakt eingelegt ist. Zum Laden ist der Kontakt des Ladegeräts elektrisch mit dem Gegenkontakt des Hörgeräts kontaktiert, wofür diese zweckmäßigerweise mechanisch direkt aneinander anliegen.

Zur Herstellung der elektrischen Kontaktierung wird geeigneterweise aufgrund einer magnetischen Wechselwirkung zwischen dem Gegenkontakt und dem Magneten dieser in Längsrichtung bewegt, sodass der daran angebundene Kontakt in der Öffnung auf den Gegenkontakt zu bewegt wird bis diese aneinander anliegen. Zweckmäßigerweise weist das Ladegerät die Einlage auf, mittels derer das Hörgerät gehalten und/oder stabilisiert wird, wenn das Hörgerät geladen wird. Bei dem System sind dabei die beiden Geräte, also das Ladegerät und Hörgerät, voneinander losgelöst, oder miteinander verbunden, wobei das Hörgerät zweckmäßigerweise in dem etwaigen Einlage einliegt.

Die im Zusammenhang mit dem Ladegerät erläuterten Weiterbildungen und Vorteile sind sinngemäß auch auf das System zu übertragen und umgekehrt.

Nachfolgend werden Ausführungsbeispiele der Erfindung anhand einer Zeichnung näher erläutert. Darin zeigen:
- Fig. 1: perspektivisch in einer Explosionsdarstellung ein System mit einem Hörgerät und einem Ladegerät,
- Fig. 2: perspektivisch eine Einlage und eine Ladeeinrichtung des Ladegeräts,
- Fig. 3, 4: perspektivisch in einer Schnitt- bzw. Explosionsdarstellung die Ladeeinrichtung,
- Fig. 5: ausschnittsweise in einer Schnittdarstellung die Ladeeinrichtung und das damit elektrisch kontaktierte Hörgerät,
- Fig. 6: perspektivisch in einer Explosionsdarstellung einer weitere Ausgestaltungsform der Ladeeinrichtung, und
- Fig. 7: perspektivisch in einer Explosionsdarstellung eine ersten Leiterplatte und zwei Kontakte der Ladeeinrichtung,
- Fig. 8, 9: perspektivisch eine weitere Ausgestaltungsform der Ladeeinrichtung in einer Explosionsdarstellung bzw. im zusammengebauten Zustand,
- Fig. 10, 11: jeweils ausschnittsweise in einer Schnittdarstellung unterschiedliche Varianten des Hörgeräts, und
- Fig. 12, 13: ausschnittsweise in einer Schnittdarstellung eine weitere Variante des Hörgeräts und der Ladeeinrichtung, die nicht unter den Schutzumfang der angehängten Ansprüche fallen.

Einander entsprechende Teile sind in allen Figuren mit den gleichen Bezugszeichen versehen.

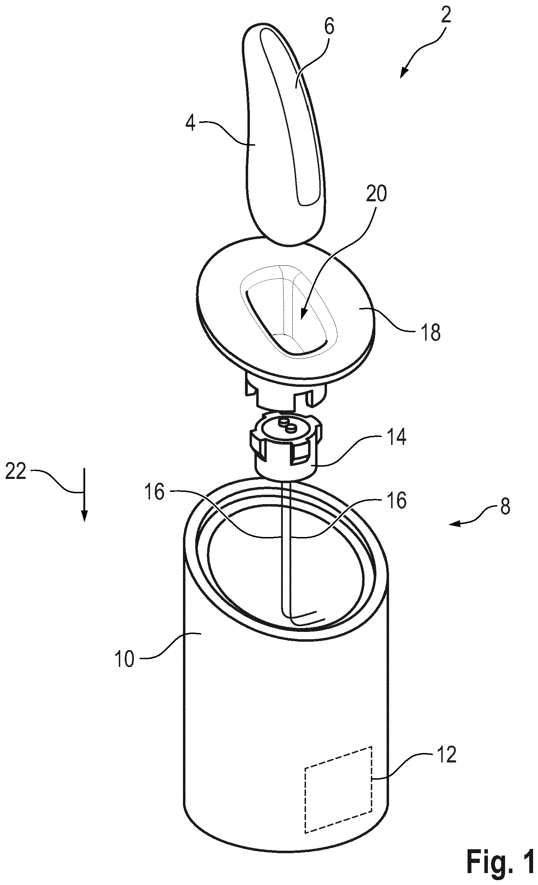

In Figur 1 ist perspektivisch in einer Explosionsdarstellung ein System 2 dargestellt, das ein Hörgerät 4 in Form eines Hörhilfegeräts umfasst. Das Hörhilfegerät 4 ist ein "Behind-the-ear"(BTE)- oder "Receiver-in-canal"(RIC)-Hörhilfegerät und umfasst ein Hörgerätegehäuse 6, das aus einem Kunststoff gefertigt ist. Innerhalb des Hörgerätegehäuses 6 ist ein nicht näher dargestellter Energiespeicher in Form einer wiederaufladbaren Batterie angeordnet. Zudem ist in dem Hörgerätegehäuse 6 eine mittels des Energiespeichers bestromte Verstärkerschaltung sowie ein elektromechanischer Schallwandler in Form eines Mikrofons vorhanden.

Das System 2 weist ferner ein Ladegerät 8 auf, das eine becherförmige Ladeschale 10 aufweist. Die Ladeschale 10 ist aus einem Kunststoff gefertigt und starr ausgebildet. Innerhalb der Ladeschale 10 ist eine nicht näher dargestellte Ladeschaltung 12 angeordnet, die einen Wandler und/oder Transformator umfasst, und mittels derer bei Betrieb eine elektrische Gleichspannung bereitgestellt wird. Hierfür umfasst die Ladeschaltung 12 ein nicht näher dargestelltes Kabel, das zur elektrischen Verbindung mit einem nicht näher dargestellten Stromnetz geeignet ist. Zudem weist das Ladegerät 8 eine Ladeeinrichtung 14 auf, die zwei Leitungen 16 umfasst. Im Montagezustand sind die beiden Leitungen 16 mit der Ladeschaltung 12 elektrisch kontaktiert, sodass die Ladeeinrichtung 14 über die Leitungen 16 mittels der Ladeschaltung 12 mit elektrischer Energie versorgt wird.

Das Ladegerät 8 eine Einlage 18 auf, mittels derer die Ladeschale 10 teilweise ausgekleidet ist. Die Einlage 18 ist aus einem Gummi erstellt, und mittels derer wird die Öffnung der becherförmige Ladeschale 12 verschlossen, wofür die Einlage 18 dort angeordnet wird. Die Einlage 18 weist eine Aufnahme 20 auf, die an die Form des Hörgeräts 4 angepasst ist, sodass das zumindest ein Teil des Hörgeräts 4 formschlüssig innerhalb der Aufnahme 20 der Einlage 18 positioniert werden kann, und dort sicher gehalten wird. Die Einlage 18 ist lösbar an der Ladeschale 10 befestigt, und die Ladeeinrichtung 14 ist lösbar an der Einlage 18 befestigt, wobei sich die Ladeeinrichtung 14 in einer Längsrichtung 22, die lotrecht ist, also vertikal, unterhalb der Einlage 18 und unterhalb der Aufnahme 20 befindet. Somit wird die Ladeeinrichtung 14 mittels der Einlage 18 sowie der Ladeschale 20 umgeben und daher geschützt. Auch ist die Ladeschaltung 12 dort angeordnet und wird mittels der Ladeschale 10 und der Einlage 18 geschützt. In eine Abwandlung ist die Einlage 18 aus einem starren Kunststoff geformt, sodass die Befestigung der Ladeeinrichtung 14 vereinfacht ist. Alternativ oder in Kombination hierzu ist zwischen der Aufnahme 20 und dem Hörgerät 4 mehr Spiel gebildet, sodass unterschiedlichste Geräte mittels der Aufnahme 20 aufgenommen werden können.

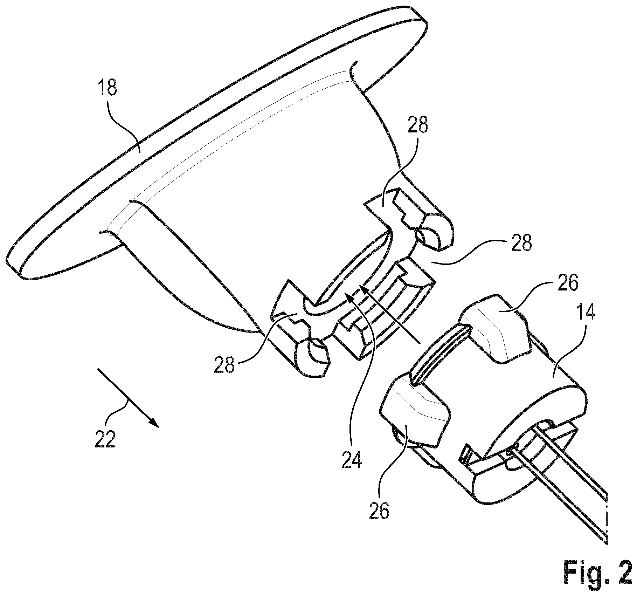

In Figur 2 ist perspektivisch die Einlage 18 sowie die Ladeeinrichtung 14 dargestellt. Die Einlage 18 weist eine Ladeöffnung 24 auf, die in die Aufnahme 20 mündet, und die das in Längsrichtung 22 untere Ende der Aufnahme 20 bildet. Die Ladeöffnung 24 ist im Montagezustand mittels der Ladeeinrichtung 14 verschlossen, die mehrere Federn 26 aufweist, die jeweils in korrespondierenden und in Längsrichtung 22 verlaufenden Nuten 28 der Einlage 18 im Montagezustand einliegen. Aufgrund der Anordnung der Nuten 28 sowie der Federn 26 ist es möglich, die Ladeeinrichtung 14 in unterschiedlichen Positionen bezüglich der Einlage 18 zu positionieren, sodass unterschiedliche Hörgeräte 4 mit dem Ladegerät 8 verwendet werden können. Auch ist es aufgrund der lösbaren Befestigung der Ladeeinrichtung 14 und der Einlage 18 sowie der Ladeschale 10 möglich, die Einlage 18 durch eine andere Einlage zu ersetzen und somit auf ein anderes Hörgerät 4 anzupassen, bei der die Form der Aufnahme 20 entsprechend abgeändert ist.

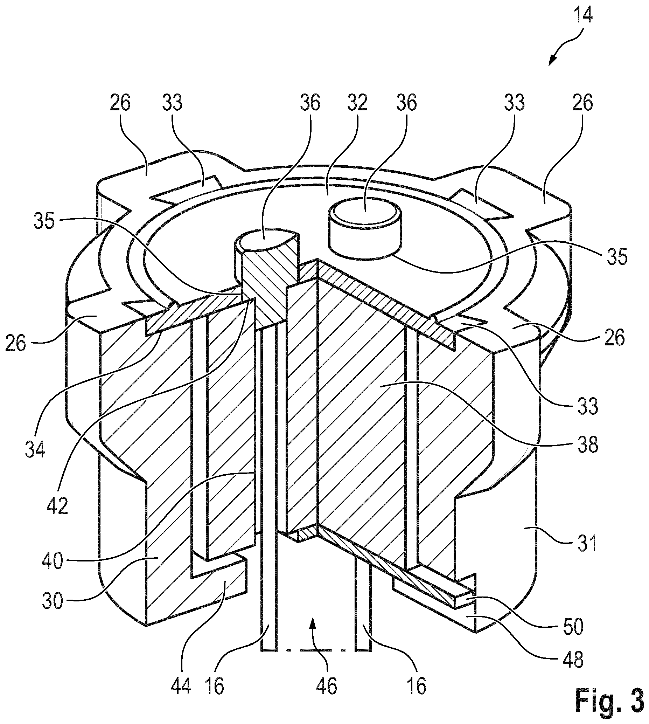

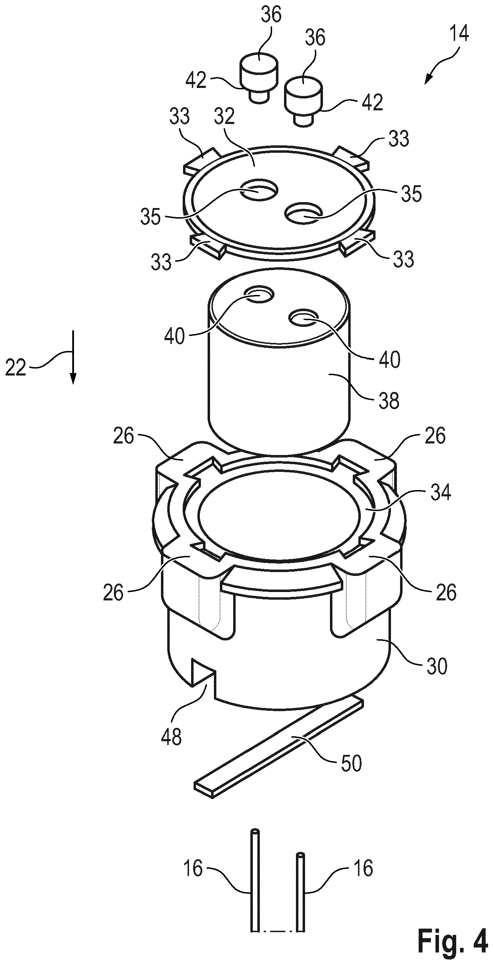

In Figur 3 ist in einer Schnittdarstellung und in Figur 4 in einer Explosionsdarstellung die Ladeeinrichtung 14 perspektivisch gezeigt. Die Ladeeinrichtung 14 weist ein Gehäuse 30 mit einem topfförmigen Rest(-gehäuse) 31 auf, dessen Achse parallel zu der Längsrichtung 22, also lotrecht, ist. Hierbei weist der Rest 31 die Federn 26 auf, die rotationssymmetrisch zueinander angeordnet sind. Der Rest 31 des Gehäuses 30 ist aus einem Kunststoff gefertigt, und an dem in Längsrichtung 22 oberen Ende mittels eines Gehäusedeckels 32 des Gehäuses 30 verschlossen, der biegeelastisch ausgestaltet und aus einem Gummi gefertigt ist. Der Gehäusedeckel 32 ist an dem Rest 31 mittels eines nicht näher dargestellten Klebers befestigt. Der Gehäusedeckel 32 ist senkrecht zur Längsrichtung 20 angeordnet sowie rund ausgestaltet und weist vier Fortsätze 33 auf, die sich im Bereich der Federn 26 des Rests 31 befinden, und die in einer entsprechend geformten Vertiefung 34 des Rests 31 zumindest teilweise einliegen, die auch einen ringförmig geformten Teil aufweist, innerhalb dessen eine Rand des Gehäusedeckels 32 einliegt.

Der Gehäusedeckel 32 weist zwei in Längsrichtung 22 verlaufende Öffnungen 35 auf, innerhalb derer jeweils ein Kontakt 36 eingelegt ist. Die Kontakte 36 sind zylinderförmig, wobei deren Achse ebenfalls parallel zur Längsrichtung 22 ist. Bei einer Ausführungsform sind die Kontakte 36 bezüglich des Gehäusedeckels 32 beweglich, und zwischen jeder Öffnung 35 und dem jeweiligen Kontakt 36 ist eine Spielpassung erstellt. In einer Alternative hierzu ist zwischen diesen eine Presspassung erstellt, oder die Kontakte 36 sind mit dem Gehäusedeckel 32 verklebt.

Innerhalb des Gehäuses 30 ist ein Magnet 38 angeordnet, der zylindrisch ausgestaltet und aus einem Ferrit gefertigt ist. Mit anderen Worten ist der Magnet 38 ein Permanentmagnet. Die Achse des Magneten 38 ist parallel zur Längsrichtung 22, und der Magnet 38 weist zwei in Längsrichtung 22 verlaufende Aussparungen 40 auf, die nach Art einer Bohrung ausgestaltet sind und durch den vollständigen Magneten 38 hindurchragen. Innerhalb jeder Aussparungen 40 ist jeweils eine der Leitungen 16, die als Kabel oder Litze ausgestaltet sind, endseitig eingelegt, und an jedem der Enden der Leitungen 16 ist jeweils direkt einer der Kontakte 36 befestigt und somit elektrisch damit kontaktiert. Hierbei ist jeder Kontakt 36 an dem in Längsrichtung 22 unteren Ende mittels einer Stufe 42 verjüngt, die über die Aussparung 40 übersteht. Der untere Teil jedes Kontakts 36 ist innerhalb der jeweiligen Aussparung 40 angeordnet, die somit mittels des jeweiligen Kontakts 36 verschlossen ist. Zusammenfassend sind an einem Längsende 43 des Magneten 38 die beiden Kontakte 36 angebunden, die mittels der jeweils zugeordneten Leitung 16 mit der Ladeschaltung 12 elektrisch verbunden sind, wobei der Gehäusedeckel 32 die zwei Öffnungen 35 aufweist, innerhalb derer die Kontakte 36 eingelegt sind. Hierbei ist die Ladeeinrichtung 14 derart angeordnet, dass die Längsrichtung 22 lotrecht ist, wobei sich der Kontakte 36 oberhalb des Magneten 38 befinden.

Auf der dem Gehäusedeckel 32 gegenüberliegenden Seite ist das Gehäuse 30 mittig ausgespart, sodass dieses Ende des Gehäuses 30 mittels eines ringförmige Anschlag 44 ausgebildet ist. Durch die auf diese Weise gebildeten weitere Öffnung 46 sind die beiden biegeschlaffen Leitungen 16 aus dem Gehäuse 30 herausgeführt.

Ferner weist das Gehäuse 30, nämlich der topfförmigen Rest 31, einen in Längsrichtung verlaufenden Schlitz 48 auf, innerhalb dessen eine quer zur Längsrichtung 22 angeordnet Leiste 50 angeordnet ist, die auf der dem Längsende 43 in Längsrichtung 22 gegenüberliegenden Seite des Magneten 28 an diesem angeklebt ist. Dabei ist es möglich, den Magneten 38 innerhalb des Gehäuses 30 zu bewegen, wobei mittels des Anschlags 44 sowie des Schlitzes 48 die Bewegung des Magneten 38 begrenzt ist. Mit anderen Worten ist der Magnet 38 in der Längsrichtung 22 beweglich geführt.

Bei einer Bewegung des Magneten 38 erfolgt ein Bewegen der beiden Kontakte 36 in Längsrichtung 22. Wenn die Kontakte 36 beweglich bezüglich des Gehäusedeckels 32 sind, werden dabei die Kontakte 36 zumindest teilweise durch die Öffnungen 35 hindurchbewegt. Falls dahingegen die Kontakte 36 an dem Gehäusedeckel 32 befestigt sind, wird der Gehäusedeckel 32 zumindest teilweise ausgewölbt. Wenn keine weiteren Kräfte wirken, liegt der Magnet 38 aufgrund der Gewichtskraft auf dem Anschlag 44 auf, und die Kontakte 36 sind in Längsrichtung 22 zum untersten möglichen Position bewegt.

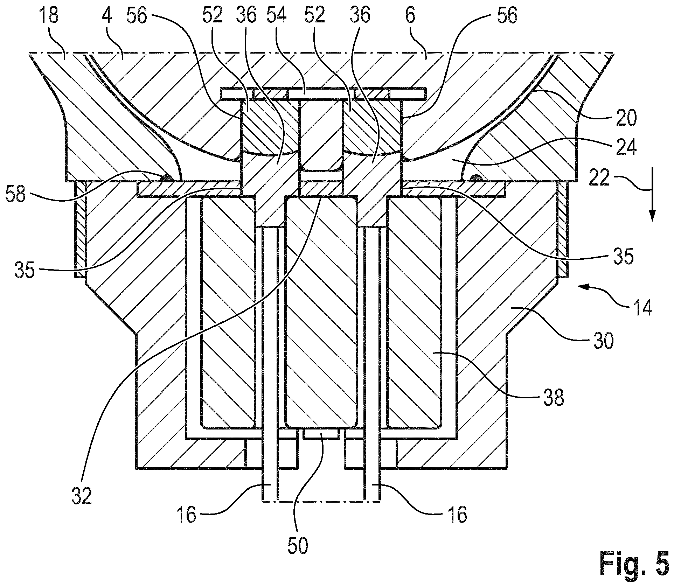

Wenn das Hörgerät 4 in Längsrichtung 22 von oben in die Aufnahme 20 eingelegt wird, nähern sich zwei in das Hörgerätegehäuse 6 eingebrachte Gegenkontakte 52 der Ladeöffnung 24 an, wie in Figur 5 in einer Schnittdarstellung entlang der Längsrichtung 22 gezeigt. Die Gegenkontakte 52 sind aus einem ferromagnetischen Metall erstellt und elektrisch mittels einer weiteren Leiterplatte 54, die innerhalb des Hörgerätegehäuses 6 angeordnet ist, mit der wiederaufladbaren Batterie elektrisch verbunden. Jeder Gegenkontakt 52 ist innerhalb eines jeweiligen Sacklochs 56 angeordnet und bezüglich der Oberfläche des Hörgerätegehäuse 6 nach Innen versetzt. Aufgrund der Form der Aufnahme 20 werden die Gegenkontakte 20, die ebenfalls zylinderförmig sind, derart ausgerichtet, dass deren Achse parallel zur Längsrichtung 22 ist.

Mit zunehmender Annäherung verstärkt sich die Wechselwirkung der Gegenkontakte 52 mit dem Magneten 38, sodass dieser innerhalb des Gehäuses 30 in Längsrichtung 22 nach oben bewegt wird. Infolgedessen werden ebenfalls die Kontakte 36 in Längsrichtung 22 nach oben auf das Hörgerät 4 zu bewegt. Falls die Kontakte 36 nicht an dem Gehäusedeckels 32 befestigt sind, werden die Kontakte 36 durch den Gehäusedeckel 32 hindurchbewegt. Falls die Kontakte 36 an dem Gehäusedeckel 32 befestigt sind, wird der Gehäusedeckel 32 in Richtung des Hörgeräts 4 ausgewölbt. Aufgrund der Leiste 50 wird jeweils ein übermäßiges Bewegen des Magneten 38 und somit der Kontakte 36 auf das Hörgerät 4 zu vermieden. Wenn das Hörgerät 4 ausreichend an die Ladeeinrichtung 14 angenähert wurde, tauchen die Kontakte 36 endseitig teilweise in die Sacklöcher 56 ein. Hierfür ist die Position der Sacklöcher 56 auf die Position der Öffnungen 35 angepasst. Wenn das Hörgerät 4 sicher in der Aufnahme 20 einliegt, liegen die Kontakte 36 mechanisch direkt an dem jeweils zugeordneten Gegenkontakten 52 an und sind somit damit elektrisch kontaktiert. Aufgrund der direkten mechanischen Anlage zwischen dem Kontakt und 36 und den jeweils zugeordneten Gegenkontakt 52 erfolgt zwischen diesen eine elektrische Kontaktierung, sodass die Kontakte 36 der lösbaren, direkten elektrischen Kontaktierung mit den Gegenkontakten 52 des Hörgeräts 4 dienen. Die dem Magneten 38 abgewandten Enden der Kontakte 36 sind gewölbt ausgestaltet, also die den Gegenkontakten 52 zugewandten Enden. Hierbei sind diese Enden konvex geformt. Die den Kontakten 36 zugewandten Enden der Gegenkontakte 52 hingegen sind konkav gewölbt, wobei sich die Art der Wölbung entspricht, weswegen eine direkte flächige Anlage zwischen diesen erfolgt. Aufgrund der Wölbung ist auch bei einer nicht exakten Ausrichtung des Hörgeräts 4 bezüglich der Ladeeinrichtung 14 ein flächiger Kontakt zwischen den Kontakten 36 und den Gegenkontakten 52 ermöglicht.

Bei Betrieb wird über die Leitungen 16 mittels der Ladeschaltung 12 eine elektrischen Spannung an die Kontakte 36 angelegt, sodass über die Kontakte 36 und die Gegenkontakte 52 ein elektrischer Strom geführt wird, mittels dessen die wiederaufladbare Batterie des Hörgeräts 4 aufgeladen wird. Wenn das Laden beendet ist, wird das Hörgerät 4 in Längsrichtung 22 nach oben aus der Aufnahme 20 bewegt, und die magnetischen Wechselwirkung zwischen den Gegenkontakten 52 und dem Magneten 38 verringert sich. Infolgedessen wird der Magnet 38 wegen der weiterhin wirkenden Gewichtskraft erneut in Längsrichtung 20 nach unten bewegt, und folglich auch die Kontakte 36, sodass diese mittels des Gehäuses 30 zumindest teilweise umgeben sind, weswegen eine Beschädigung vermieden ist. Auch ist es dabei nicht erforderlich, dass die Gegenkontakte 52 über das Hörgerätegehäuse 6 überstehen, weswegen eine Beschädigung dieser ebenfalls vermieden ist.

Die Ladeöffnung 24 ist mittels des Gehäusedeckels 32 verschlossen, der seitlich, also senkrecht zur Längsrichtung 22 bezüglich der Ladeöffnung 34 übersteht. Auf der der Einlage 18 zugewandten Seite ist an dem Gehäusedeckel 32 eine Dichtung 58 angeformt oder ein Teil davon. Die Dichtung 58 ist eine ringförmige Wulst, die um die Ladeöffnung 24 herum angeordnet ist, sodass ein Eintritt von Fremdpartikeln zwischen dem Gehäuse 30 und der Einlage 18 vermieden ist.

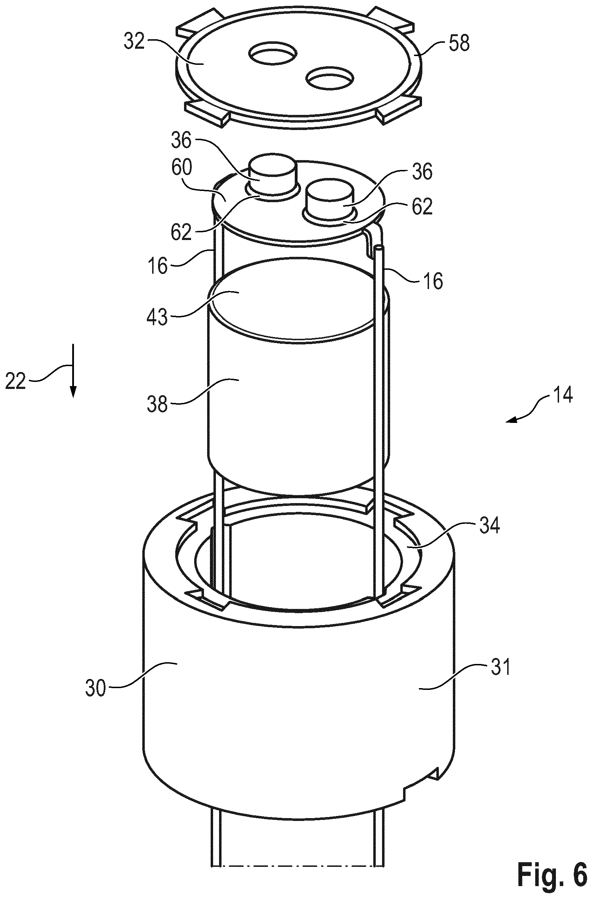

In Figur 6 ist eine Abwandlung der Ladeeinrichtung 14 in einer Explosionsdarstellung perspektivisch gezeigt. Der Gehäusedeckel 32 hingegen ist nicht verändert. Der Rest 31 des Gehäuses 30 weist nunmehr beispielsweise nicht mehr die Federn 26 auf, jedoch ist es auch möglich, dass diese weiterhin vorhanden sind. Jedoch ist der Magnet 38 nunmehr unversehrt und weist folglich nicht mehr die Aussparungen 40 auf, weswegen eine Fertigung von diesem erleichtert ist. Die beiden Kontakte 36 sind an einer runden und senkrecht zur Längsrichtung 22 angeordneten ersten Leiterplatte 60 mittels SMD-Technik befestigt. Die erste Leiterplatte 60 ist aus einem glasfaserverstärkten Epoxidharz gefertigt und an dem Längsende 43 des Magneten 38 befestigt.

Jede Leitung 16 ist mittels einer jeweiligen flexiblen Leiterplatte gebildet, die jeweils endseitig an der ersten Leiterplatte 60 befestigt sind. Die beiden flexiblen Leiterplatten, also die beiden Leitungen 16 sind am Umfang des Magneten 38 entlang der Längsrichtung 22 geführt und verlaufen somit in Längsrichtung zwischen dem Magneten 38 und dem Rest des Gehäuses 31. Auch treten diese wiederum durch die weitere Öffnung 46 aus dem Gehäuse 30 auf und sind mit der Ladeschaltung 12 elektrisch verbunden, die nicht verändert ist.

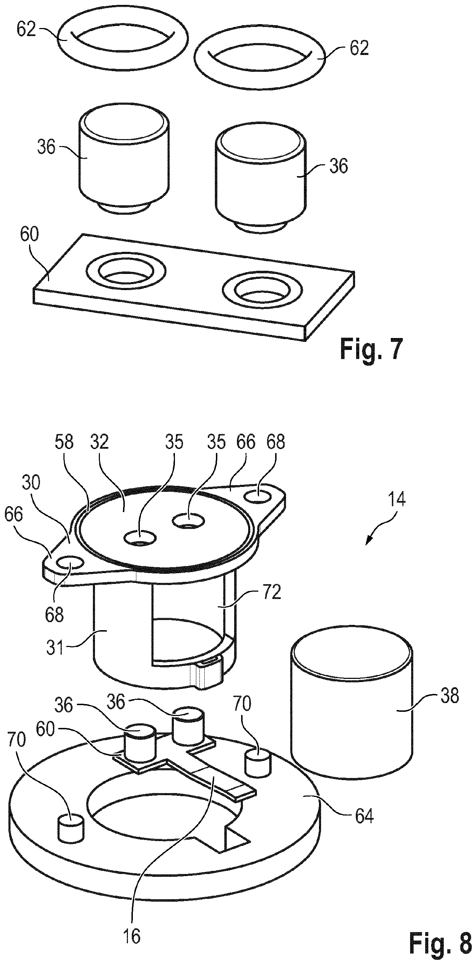

In Figur 7 ist eine Abwandlung der ersten Leiterplatte 60 dargestellt, die nunmehr rechteckförmig ausgestaltet ist. Auch sind zwei Dichtringe 62 abgenommen, die aus einem Gummi gefertigt sind, und die jeweils einem der Kontakte 36 zugeordnet sind. Im Montagezustand liegen dabei die Dichtringe 62, ebenso wie bei der vorhergehenden Ausführungsform, auf der ersten Leiterplatte 60 auf und werden auf diese Weise dort stabilisiert. Mittels der Dichtring 62 wird sichergestellt, dass ein Eintritt von Fremdpartikeln durch die Öffnung 35 in das Gehäuse 30 unterbleibt. In einer Weiterbildung ist die Leiterplatte 16 ein Bestandteil des Hörgeräts 4, und die dargestellten Kontakte 36 bilden die Gegenkontakte 52. In einer weiteren Abwandlung sind die Dichtringe 62 nicht vorhanden. Die Dichtwirkung ist dabei mittels des aus einem elastischen Material gefertigten Deckels 32 realisiert. Der Deckel 32 der Ladeeinrichtung 14 ist somit Führung, Lagerung und Abdichtung in einem.

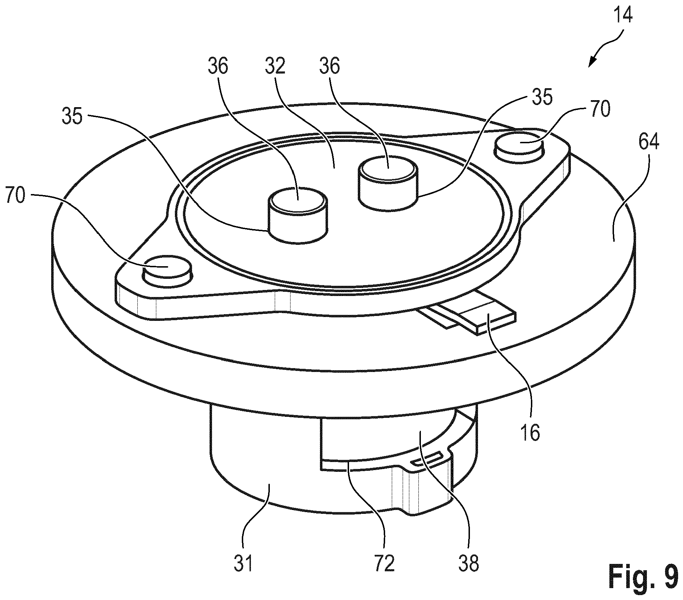

In Figur 8 ist eine weitere Ausgestaltungsform der Ladeeinrichtung 14 in einer Explosionsdarstellung und in Figur 9 in eine montierten Zustand gezeigt. Das Gehäuse 30 ist einstückig aus einem biegeelastischen Gummi gefertigt, sodass der Gehäusedeckel 32 und dem Rest 31 angeformt ist. Der Gehäusedeckel 32 weist wiederum die beiden Öffnungen 35 auf, innerhalb derer im Montagezustand die beiden Kontakte 36 einliegen. Diese sind wiederum an der ersten Leiterplatte 60 befestigt, die als flexible Leiterplatte ausgestaltet und einstückig mit der die Leitungen 16 bereitstellenden flexiblen Leiterplatte ist. Mit anderen Worten werden die beiden Leitungen 16 mittels der gemeinsamen flexiblen Leiterplatte gebildet.

Die flexible Leiterplatte und somit die Leitungen 16 sind im Montagezustand an einer zweiten Leiterplatte 64 befestigt und elektrisch mit dieser kontaktiert, die ein Bestandteil der Ladeschaltung 12 ist und nicht näher dargestellte elektrische und/oder elektronische Bauteile umfasst. Die zweite Leiterplatte 64 ist senkrecht zur Längsrichtung 22 angeordnet sowie ringförmig ausgestaltet. Dabei umgibt die zweite Leiterplatte 64 umfangsseitig den Rest 31 des Gehäuses und liegt an zwei gegenüberliegenden Laschen 66 des Gehäusedeckels 32 an, die über die Dichtung 58 seitlich überstehen. In jede Laschen 66 ist eine Halteöffnungen 68 eingebracht, in die korrespondierende Zapfen 70 der zweiten Leiterplatte 64 eingreifen, sodass das Gehäuse 30 bezüglich der zweiten Leiterplatte 64 stabilisiert ist. Zusammenfassend wird somit das Gehäuse 30, zumindest der Rest 31, umfangsseitig von der zweiten Leiterplatte 64 der Ladeschaltung 12 umgeben, und die zweite Leiterplatte 64 ist an dem Gehäusedeckel 32, nämlich den Laschen 66, befestigt.

Der Magnet 38 ist im Vergleich zur vorherigen Ausführungsform nicht verändert und wird durch einen Montageöffnung 72 in das Gehäuse 30 eingeführt, die in eine Umfangsseite des Rests 31 eingebracht ist. Hierfür wird die Montageöffnung 72 elastisch aufgeweitet. Der Schlitz 48 und die Leiste 50 der vorhergehenden Ausführungsformen hingegen sind nicht vorhanden.

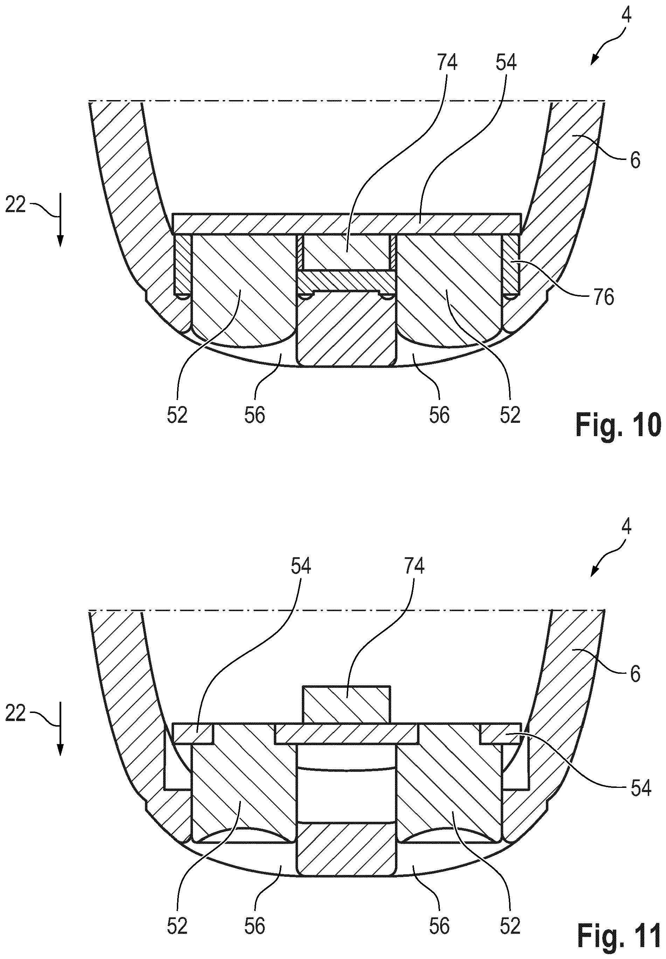

In Figur 10 ist eine Abwandlung des Hörgeräts 4 in einer Schnittdarstellung ausschnittsweise gezeigt. An der weiteren Leiterplatte 54 ist auf der in Längsrichtung 22 unteren Seite, also auf der der Ladeeinrichtung 14 zugewandten Seite, ein Hall-Sensor 74 befestigt. Mittels dessen wird die Annäherung des Hörgeräts 4 an den Magneten 38 erfasst. Wenn die mittels des Hall-Sensors 74 erfassten Messdaten einen bestimmten Wert überschreiten, ist sichergestellt, dass die Gegenkontakte 52 einen bestimmten Abstand zu dem Magneten 38 unterschritten haben, bei dem die Gegenkontakte 52 aufgrund der konstruktiven Gegebenheiten mechanisch direkt an den Kontakten 36 anliegen. Die Gegenkontakte 52 sind auch weiterhin in den Sacklöchern 56 angeordnet, deren Boden jeweils mittels der weiteren Leiterplatte 54 bereitgestellt ist. Die Gegenkontakte 52 sind bei dieser Variante lediglich auf die weitere Leiterplatte 54 aufgesetzt, ohne dass diese durch die weitere Leiterplatte 54 hindurchragen.

Zudem ist an der weiteren Leiterplatte 54 eine weitere Dichtung 76 befestigt, die sich auf der Seite des Hall-Sensors 74 befindet und diesen umschließt. Auch umgibt die weitere Dichtung 76 die Gegenkontakte 52 und dient der Abdichtung des Inneren des Hörgerätegehäuses 6. Mit anderen Worten sind die Sacklöcher 56 mittels der weiteren Dichtung 76 endseitig ausgekleidet, sodass ein Eindringen von Fremdpartikeln in das Hörgerätegehäuse 6 vermieden ist.

In einer Weiterbildung ist der Aufbau des Hörgeräts 4 weiter vereinfacht. Dabei ist die weitere Leiterplatte 54 ein Teil einer Hauptelektronik, und die magnetisch und elektrischen Gegenkontakte 52 sind direkt mit SMD aufgebracht, entweder durch eine Lochpositionierung oder flach ohne Absatz mit einer Positionierungshilfe im Prozess. Die weitere Dichtung 76 kann einteilig oder aber auch, wie gezeigt, aus zwei Ringen bestehen und dichtet zum Gehäuse 6 des Hörgerätes 4 ab.

In einer weiteren Abwandlung ist der Hall-Sensor 74 nicht vorhanden, und an dieser Stelle ist beispielsweise eine andere Elektronik des Hörgeräts 4 angeordnet, sodass das Hörgerät 4 vergleichsweise kompakt ist. Der Hall-Sensor 74, sofern dieser vorhanden ist, kann zudem bestimme Steuerungsaufgaben für das Hörgerät 4 erfüllen und ist vorzugsweise vergleichsweise nahe an dem Magneten 38 angeordnet.

In Figur 11 ist eine Abwandlung des Hörgeräts 4 ausschnittsweise entsprechend der vorhergehenden Figur dargestellt. Die weitere Dichtung 76 ist ebenfalls vorhanden, jedoch nicht dargestellt, und dient wiederum der Abdichtung des Inneren des Hörgerätegehäuses 6. Hierfür umgibt die weitere Dichtung 76 weiterhin die beiden Gegenkontakte 52 und kleidet die Sachlöcher 56 teilweise aus. Auch ist die weitere Dichtung 76 weiterhin an der weiteren Leiterplatte 54 befestigt.

Die beiden Gegenkontakte 52 ragen wiederum durch die weitere Leiterplatte 54 hindurch, wie auch bei der in Figur 5 gezeigten Variante. Der Hall-Sensor 74 ist auf der den Öffnungen der Sacklöcher 56 gegenüberliegenden Seite, also auf der in Längsrichtung 22 oberen Seite der weiteren Leiterplatte 54 angeordnet, wenn das Hörgerät 4 innerhalb der Aufnahme 20 gehalten ist.

Die zu Figur 10 genannten Weiterbildungen können auch bei der in Figur 11 gezeigten Variante Verwendung finden.

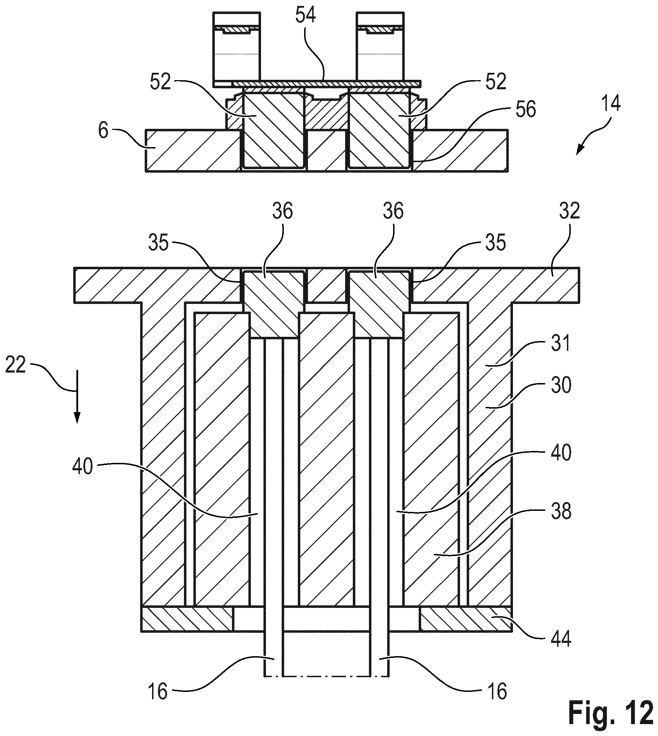

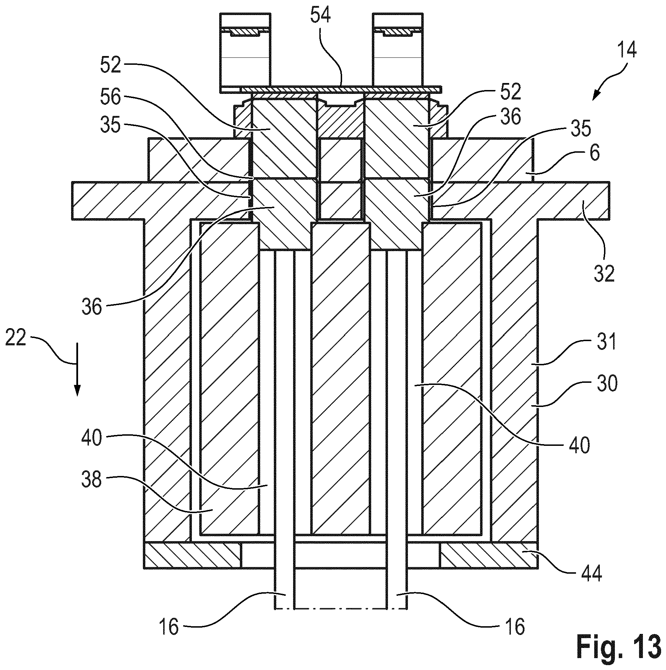

In Figur 12 und Figur 13 ist in einer Schnittdarstellung entlang der Längsrichtung 22 eine letzte Abwandlung der Ladeeinrichtung 14 gezeigt. Bei dieser nicht unter den Schutzumfang der Ansprüche fallenden Ausführung sind sämtliche Bestandteile des Gehäuses 30 aus einem starren Kunststoff gefertigt. Der Gehäuse 30 weist auch weiterhin den Rest 31 auf, an dem jedoch der Gehäusedeckel 32 angeformt und einstückig mit diesem ist. Als Abwandlung ist der Anschlag 44, der auch weiterhin mittels eines starren Rings gebildet ist, und der das in Längsrichtung 22 untere Ende des Gehäuses 30 bildet, separates Bauteil. Im Montagezustand ist der Anschlag 44 an den weiteren Bestandteilen des Rests 31 befestigt, beispielsweise mittels Schweißens oder Klebens. Wenn der Anschlag 44 noch nicht montiert ist, wird von dieser Seite der Magnet 38 in das Gehäuse 30 eingeführt, der entsprechend der in den Figuren 3-5 gezeigten Variante ausgestaltet ist. So weist der Magnet 38 wiederum die beiden in Längsrichtung 22 verlaufenden Aussparungen 40 auf.

Auch entsprechen die Leitungen 16 der in den Figuren 3-5 gezeigten Variante. Die Kontakte 36 sind wiederum in den Öffnungen 35 angeordnet, und mit Ausnahme der den Magnet 38 gegenüberliegenden Enden entsprechend der vorhergehenden Ausgestaltungsform gefertigt. Diese Enden sind jedoch im Unterscheid zu den vorhergehenden Ausführungsformen eben und glatt ausgestaltet. Auch ist zwischen den Kontakten 36 und der jeweiligen Aussparung 35 eine Spielpassung gebildet, sodass die Kontakte 36 in Längsrichtung 22 durch den Gehäusedeckel 32 mittels des Magneten 38 bewegt werden können.

Die Gegenkontakte 52 sind bezüglich der Oberfläche des Hörgerätegehäuses 6 nach innen versetzt, sodass die Gegenkontakte 52 nicht über die Oberfläche des Hörgerätegehäuses 6 überstehen. Wenn die Gegenkontakte 52, die ebenfalls endseitig eben ausgestaltet und auch weiterhin an der weiteren Leiterplatte 54 befestigt sind, an die Ladeeinrichtung 14 angenähert werden, werden die beiden Kontakte 36 in Längsrichtung 22 aufgrund der magnetischen Wechselwirkung nach oben bewegt, wie in Figur 13 dargestellt, sodass wiederum die elektrische und mechanische Kontaktierung der Kontakte 36 mit den beiden Gegenkontakten 52 erfolgt. In diesem Zustand stehen die Kontakte 36 in Längsrichtung 22 nach oben über den Gehäusedeckel 32 über und tauchen in die Sacklöcher 56 endseitig ein, die bei dieser Ausführungsform keinen Boden aufweisen.

Wenn das Hörgerät 4 von der Ladeeinrichtung 14 beabstandet wird, kann die magnetische Wechselwirkung die Gewichtskraft nicht kompensieren, sodass der Magnet 38 in Längsrichtung 22 nach unten bewegt wird, bis dieser auf dem Anschlag 44 ruht, wie in Figur 12 dargestellt. In diesem Fall sind die Kontakte 36 in die Öffnungen 35 zurückgezogen, sodass diese nicht in Längsrichtung 22 nach oben über die Gehäusedeckel 32 überstehen. In diesem Zustand sind die Kontakte 36 zum Beispiel bündig mit der Oberfläche des Gehäusedeckels 32 oder in Längsrichtung 22 geringfügig weiter nach unten versetzt. Somit ist eine Beschädigung der Kontakte 36 verhindert. Die Bewegung des Magneten 38 und somit der Kontakte 36 in Längsrichtung 22 wird bei dieser Ausführungsform mittels des starren Gehäusedeckels 32 sowie des starren Anschlags 44 begrenzt. In einer Weiterbildung sind die Gegenkontakte 52 und/oder die Kontakte 36 wiederum gewölbt ausgestaltet.

Zusammenfassend sind bevorzugt alle Pins, nämlich die beiden Kontakte 36 und die beiden Gegenkontakte 52 des Hörgeräts 4, elektrisch und magnetisch. Das Material ist vorzugsweise magnetischer Stahl. Die Feldlinien des Magneten 38 werden durch die Anordnung und Form der Pins (Kontakte 36 / Gegenkontakte 52) gebündelt und ausgerichtet. Auf diese Weise entsteht eine effektive magnetische Kraftausnutzung aufgrund der hohen Anzahl und der Enge der Feldlinien zwischen den Pin-Paaren. Die Pins werden durch den Magneten 38 magnetisiert und schnappen durch die wirkende Magnetkraft bei genügend kleinem Abstand zusammen.

Die Erfindung ist nicht auf die vorstehend beschriebenen Ausführungsbeispiele beschränkt. Vielmehr können auch andere Varianten der Erfindung von dem Fachmann hieraus abgeleitet werden, der Schutzumfang der Erfindung ist alleine durch die nachfolgenden Ansprüche definiert.

### Bezugszeichenliste

- 2: System
- 4: Hörgerät
- 6: Hörgerätegehäuse
- 8: Ladegerät
- 10: Ladeschale
- 12: Ladeschaltung
- 14: Ladeeinrichtung
- 16: Leitung
- 18: Einlage
- 20: Aufnahme
- 22: Längsrichtung
- 24: Ladeöffnung
- 26: Feder
- 28: Nut
- 30: Gehäuse
- 31: Rest
- 32: Gehäusedeckel
- 33: Fortsatz
- 34: Vertiefung
- 35: Öffnung
- 36: Kontakt
- 38: Magnet
- 40: Aussparung
- 42: Stufe
- 43: Längsende
- 44: Anschlag
- 46: weitere Öffnung
- 48: Schlitz
- 50: Leiste
- 52: Gegenkontakt
- 54: weitere Leiterplatte
- 56: Sackloch
- 58: Dichtung
- 60: erste Leiterplatte
- 62: Dichtring
- 64: zweite Leiterplatte
- 66: Lasche
- 68: Halteöffnung
- 70: Zapfen
- 72: Montageöffnung
- 74: Hall-Sensor
- 76: weitere Dichtung

## Patentansprüche

1. Ladegerät (8) eines Hörgeräts (4), mit einer Ladeeinrichtung (14), die ein ein Gehäusedeckel (32) umfassendes Gehäuse (30) und einen darin angeordneten, in einer Längsrichtung (22) beweglich geführten Magneten (38) aufweist, an dem an einem Längsende (43) ein Kontakt (36) zur lösbaren, direkten elektrischen Kontaktierung mit einem Gegenkontakt (52) des Hörgeräts (4) angebunden ist, wobei der Kontakt (36) mittels einer Leitung (16) mit einer Ladeschaltung (12) elektrisch verbunden ist, wobei der Gehäusedeckel (32) eine Öffnung (35) aufweist, innerhalb derer der Kontakt (36) eingelegt ist, **dadurch gekennzeichnet, dass** der Gehäusedeckel (32) derart biegeelastisch ausgestaltet ist, dass aufgrund der wirkenden magnetischen Kraft zwischen dem Magneten und dem Gegenkontakt der Gehäusedeckel (32) mittels des Magneten (38) zumindest teilweise elastisch in Richtung des Gegenkontakts (52) gewölbt wird, sodass eine elektrische Kontaktierung des Kontakts (36) mit dem Gegenkontakt (52) erfolgt.

2. Ladegerät (8) nach Anspruch 1,
**dadurch gekennzeichnet,**
**dass** der Kontakt (36) an einer ersten Leiterplatte (60) befestigt ist, die an dem Längsende (43) des Magneten (38) befestigt ist, und dass die Leitung (16) zumindest teilweise mittels einer flexiblen Leiterplatte gebildet ist, die an der ersten Leiterplatte (60) befestigt ist.

3. Ladegerät (8) nach Anspruch 2,
**dadurch gekennzeichnet,**
**dass** das Gehäuse (30) umfangsseitig von einer zweiten Leiterplatte (64) der Ladeschaltung (12) umgeben ist, die an dem Gehäusedeckel (32) befestigt ist.

4. Ladegerät (8) nach Anspruch 2,
**dadurch gekennzeichnet,**
**dass** die flexible Leiterplatte an dem Umfang des Magneten (38) entlang der Längsrichtung (22) geführt ist.

5. Ladegerät (8) nach Anspruch 1,
**dadurch gekennzeichnet,**
**dass** durch den Magneten (38) eine in Längsrichtung (22) verlaufende Aussparung (40) verläuft, innerhalb derer die Leitung (16) angeordnet ist, und die mittels des Kontakts (36) einseitig verschlossen ist.

6. Ladegerät (8) nach einem der Ansprüche 1 bis 5,
**dadurch gekennzeichnet,**
**dass** der Gehäusedeckel (32) aus einem Gummi erstellt ist.

7. Ladegerät (8) nach einem der Ansprüche 1 bis 6,
**dadurch gekennzeichnet,**
**dass** das Gehäuse (30) einen Anschlag (44) für den Magneten (38) aufweist, mittels dessen eine Bewegung des Magneten (38) begrenzt ist.

8. Ladegerät (8) nach einem der Ansprüche 1 bis 7,
**dadurch gekennzeichnet,**
**dass** an dem Magneten (38) auf der dem Kontakt (36) gegenüberliegenden Seite eine quer zur Längsrichtung (22) und über den Magneten (38) überstehende Leiste (50) angebunden ist, die in einem in Längsrichtung (22) verlaufenden Schlitz (48) des Gehäuses (30) geführt ist.

9. Ladegerät (8) nach einem der Ansprüche 1 bis 8,
**dadurch gekennzeichnet,**
**dass** das dem Magneten (38) abgewandte Ende des Kontakts (36) gewölbt ist.

10. Ladegerät (8) nach einem der Ansprüche 1 bis 9,
**gekennzeichnet durch**
eine Ladeschale (10), die mit einer lösbar daran befestigten Einlage (18) ausgekleidet ist, an der die Ladeeinrichtung (14) lösbar befestigt ist, wobei die Einlage (18) eine Ladeöffnung (24) aufweist, die zumindest teilweise mittels des Gehäusedeckels (32) verschlossen ist.

11. System (2) mit einem Hörgerät (4), das ein Hörgerätegehäuse (6) aufweist, in das ein Gegenkontakt (52) eingebracht ist, und mit einem Ladegerät (8) nach einem der Ansprüche 1 bis 10.

## Claims

1. Charging device (8) of a hearing aid (4), having a charging unit (14), which has a housing (30) comprising a housing cover (32) and a magnet (38) arranged therein and movably guided in a longitudinal direction (22), on which at one longitudinal end (43) a contact (36) is attached for the detachable, direct electrical contacting with a counter contact (52) of the hearing aid (4), wherein the contact (36) is electrically connected by means of a line (16) to a charging circuit (12), wherein the housing cover (32) has an opening (35), within which the contact (36) is inserted, **characterized in that** the housing cover (32) is made flexible such that the housing cover (32) is at least partially elastically curved in the direction of the counter contact (52) by means of the magnet (38) due to the acting magnetic force between the magnet and the counter contact, so that electrical contacting of the contact (36) with the counter contact (52) takes place.

2. Charging device (8) according to Claim 1, **characterized in that**
the contact (36) is fastened on a first printed circuit board (60), which is fastened on the longitudinal end (43) of the magnet (38), and the line (16) is at least partially formed by means of a flexible printed circuit board, which is fastened on the first printed circuit board (60).

3. Charging device (8) according to Claim 2, **characterized in that**
the housing (30) is circumferentially enclosed by a second printed circuit board (64) of the charging circuit (12), which is fastened on the housing cover (32) .

4. Charging device (8) according to Claim 2, **characterized in that**
the flexible printed circuit board is guided at the circumference of the magnet (38) along the longitudinal direction (22).

5. Charging device (8) according to Claim 1, **characterized in that**
a recess (40) extending in the longitudinal direction (22) extends through the magnet (38), within which the line (16) is arranged, and which is closed on one side by means of the contact (36).

6. Charging device (8) according to any one of Claims 1 to 5,
**characterized in that**
the housing cover (32) is produced from a rubber.

7. Charging device (8) according to any one of Claims 1 to 6,
**characterized in that**
the housing (30) has a stop (44) for the magnet (38), by means of which a movement of the magnet (38) is limited.

8. Charging device (8) according to any one of Claims 1 to 7,
**characterized in that**
a bar (50) protruding transversely to the longitudinal direction (22) and beyond the magnet (38) is attached to the magnet (38) on the side opposite to the contact (36), which bar is guided in a slot (48) of the housing (30) extending in the longitudinal direction (22).

9. Charging device (8) according to any one of Claims 1 to 8,
**characterized in that**
the end of the contact (36) facing away from the magnet (38) is curved.

10. Charging device (8) according to any one of Claims 1 to 9,
**characterized by**
a charging shell (10), which is lined using an inlay (18) detachably fastened thereon, on which the charging unit (14) is detachably fastened, wherein the inlay (18) has a charging opening (24), which is at least partially closed by means of the housing cover (32).

11. System (2) having a hearing aid (4), which has a hearing aid housing (6), into which a counter contact (52) is introduced, and having a charging device (8) according to any one of Claims 1 to 10.

## Revendications

1. Unité de charge (8) d'une aide auditive (4), ladite unité de charge comprenant un dispositif de charge (14) qui comporte un boîtier (30), comprenant un couvercle de boîtier (32), et un aimant (38) qui est disposé à l'intérieur, qui est guidé de manière mobile dans une direction longitudinale (22) et auquel un contact (36) est relié à une extrémité longitudinale (43) afin d'établir un contact électrique direct libérable avec un contact homologue (52) de l'aide auditive (4), le contact (36) étant relié électriquement à un circuit de charge (12) au moyen d'une ligne (16), le couvercle de boîtier (32) comportant une ouverture (35) à l'intérieur de laquelle le contact (36) est inséré, **caractérisée en ce que** le couvercle de boîtier (32) est conçu pour être flexible élastiquement de manière à ce que, en raison de la force magnétique agissant entre l'aimant et le contact homologue, le couvercle de boîtier (32) soit courbé de manière au moins partiellement élastique en direction du contact homologue (52) au moyen de l'aimant (38), de façon à établir un contact électrique entre le contact (36) et le contact homologue (52).

2. Unité de charge (8) selon la revendication 1, **caractérisée en ce que** le contact (36) est fixé à une première carte de circuit imprimé (60), qui est fixée à l'extrémité longitudinale (43) de l'aimant (38), et **en ce que** la ligne (16) est au moins partiellement formée au moyen d'une carte de circuit imprimé flexible, qui est fixée à la première carte de circuit imprimé (60).

3. Unité de charge (8) selon la revendication 2, **caractérisée en ce que** le boîtier (30) est entouré sur la circonférence par une deuxième carte de circuit imprimé (64) du circuit de charge (12), qui est fixée au couvercle de boîtier (32).

4. Unité de charge (8) selon la revendication 2, **caractérisée en ce que** la carte de circuit imprimé flexible est guidée sur la circonférence de l'aimant (38) suivant la direction longitudinale (22).

5. Unité de charge (8) selon la revendication 1, **caractérisée en ce qu'**un évidement (40), qui s'étend dans la direction longitudinale (22) et à l'intérieur duquel est disposée la ligne (16) et qui est fermé d'un côté au moyen du contact (36), s'étend à travers l'aimant (38).

6. Unité de charge (8) selon l'une des revendications 1 à 5, **caractérisée en ce que** le couvercle de boîtier (32) est en caoutchouc.

7. Unité de charge (8) selon l'une des revendications 1 à 6, **caractérisée en ce que** le boîtier (30) comporte une butée (44) destinée à l'aimant (38), laquelle limite le mouvement de l'aimant (38).

8. Unité de charge (8) selon l'une des revendications 1 à 7, **caractérisée en ce qu'**une bande (50) est reliée à l'aimant (38) du côté opposé au contact (36), laquelle bande fait saillie de l'aimant (38) transversalement à la direction longitudinale (22) et est guidée dans une fente (48) du boîtier (30), laquelle fente s'étend dans la direction longitudinale (22) .

9. Unité de charge (8) selon l'une des revendications 1 à 8, **caractérisée en ce que** l'extrémité du contact (36) opposée à l'aimant (38) est courbée.

10. Unité de charge (8) selon l'une des revendications 1 à 9, **caractérisée par** une coque de charge (10) qui est garnie d'une couche intérieure (18) qui est fixée de manière amovible à celle-ci et à laquelle le dispositif de charge (14) est fixé de manière amovible, la couche intérieure (18) comportant une ouverture de charge (24) qui est au moins partiellement fermée au moyen du couvercle de boîtier (32).

11. Système (2) comprenant une aide auditive (4), qui comporte un boîtier d'aide auditive (6) dans lequel est inséré un contact homologue (52), et une unité de charge (8) selon l'une des revendications 1 à 10.
